Europäisches Patentamt

European Patent Office

Office européen des brevets

(11) Numéro de publication: **0 302 041**
**A2**

## DEMANDE DE BREVET EUROPEEN

(21) Numéro de dépôt: 88870128.1

(22) Date de dépôt: 27.07.88

(51) Int. Cl.4: **C 21 B 5/00**

(30) Priorité: 31.07.87 BE 8700853

(43) Date de publication de la demande:
01.02.89 Bulletin 89/05

(84) Etats contractants désignés:
AT DE FR GB IT LU SE

(71) Demandeur: **CENTRE DE RECHERCHES METALLURGIQUES CENTRUM VOOR RESEARCH IN DE METALLURGIE Association sans but lucratif Vereniging zonder winstoogmerk Rue Montoyer, 47 B-1040 Bruxelles (BE)**

(72) Inventeur: **Poos, Arthur Gérard rue de Grady, 15 B-4920 Chaudfontaine-Embourg (BE)**

(74) Mandataire: **Pirmolin, Guy Jean CENTRE DE RECHERCHES METALLURGIQUES Abbaye du Val Benoît 11, rue Ernest Solvay B-4000 Liège (BE)**

(54) Procédé de conduite d'un haut fourneau.

(57) Procédé de conduite d'un haut fourneau, dans lequel on injecte simultanément du charbon pulvérisé et un comburant très riche en oxygène au niveau des tuyères principales du haut fourneau, et du gaz réducteur chaud au niveau de la zone de réserve. Le gaz réducteur chaud est produit à partir d'un gaz de récupération, en particulier à partir de gaz de gueulard, notamment en mélangeant ce gaz de gueulard avec du gaz de four à coke; il est injecté à une température comprise entre 850 et 1200°C.

Fig. 3

EP 0 302 041 A2

## Description

## Procédé de conduite d'un haut fourneau.

La présente invention concerne un procédé de conduite d'un haut fourneau utilisé pour la fabrication de fonte par réduction de minerais de fer.

On sait que, dans un haut fourneau, la charge se compose traditionnellement de couches alternées de minerai de fer et de coke chargés successivement par le gueulard. Un courant d'air chaud injecté dans les tuyères à vent, situées un peu au-dessus de la base du haut fourneau, assure la combustion du coke.

Cette combustion du coke fournit d'une part le gaz réducteur requis pour assurer la réduction des oxydes de fer et d'autre part une quantité de chaleur suffisante pour couvrir les besoins thermiques des réactions chimiques et pour assurer la fusion du métal et de la gangue. Outre ce double rôle de source de chaleur et d'agent réducteur, le coke remplit encore une troisième fonction, d'ordre mécanique, qui est de constituer une grille de support assurant le mouvement à contre-courant des gaz et des matières fondues.

Depuis de nombreuses années déjà, on cherche à réduire la mise au mille de coke au haut fourneau, c'est-à-dire la quantité de coke nécessaire à la production d'une tonne de fonte.

Une telle diminution de la consommation de coke est généralement obtenue par l'injection de combustibles auxiliaires au niveau des tuyères à vent, éventuellement combinée à une augmentation de la température ou encore à une suroxygénation du vent.

Certaines techniques particulières permettent d'atteindre des réductions de la mise au mille de coke dépassant de loin celles qu'on peut obtenir par une simple injection de combustibles auxiliaires aux tuyères.

A cet égard on connaît, notamment par le brevet LU-A-62.882, un procédé de réduction de minerai de fer dans un four à cuve, dans lequel on injecte des agents réducteurs (combustibles auxiliaires) au niveau des tuyères principales et du gaz réducteur chaud au niveau de la zone de réserve dudit four à cuve.

Par l'expression "zone de réserve", bien connue des praticiens, il faut entendre la région de la cuve du haut fourneau dans laquelle la charge se trouve à une température d'environ 1000°C. Dans cette zone de réserve, la charge est donc encore à l'état solide.

Par l'expression "au niveau des tuyères principales", il faut entendre le niveau correspondant à la partie supérieure du creuset du haut fourneau, où sont situées les tuyères à vent, dites tuyères principales, d'un haut fourneau conventionnel.

Les agents réducteurs (combustibles auxiliaires) sont en général des hydrocarbures liquides ou gazeux. Le gaz réducteur chaud injecté au niveau de la zone de réserve est principalement constitué d'hydrogène et de monoxyde de carbone.

A l'heure actuelle, les hydrocarbures liquides ou gazeux ont perdu une bonne part de leur intérêt économique au profit du charbon. Ainsi, dans de nombreux hauts fourneaux, on injecte jusqu'à 140 kg de charbon par tonne de fonte, ce qui réduit la mise au mille de coke de 100 à 120 kg environ.

Cependant, de nombreux sidérurgistes cherchent aujourd'hui des moyens pour réduire encore davantage la mise au mille de coke, soit par un accroissement du taux d'injection du charbon, soit par d'autres voies.

La présente invention a précisément pour objet de proposer un procédé de conduite d'un haut fourneau basé sur l'utilisation de charbon dans des conditions particulièrement intéressantes.

Conformément à la présente invention, le procédé de conduite d'un haut fourneau est caractérisé en ce que l'on injecte du charbon pulvérisé et un comburant très riche en oxygène au niveau des tuyères principales dudit haut fourneau, et du gaz réducteur chaud au niveau de la zone de réserve.

Par comburant très riche en oxygène, on entend ici un gaz comburant dont la teneur en oxygène est d'au moins 55 % en volume; de préférence, on injecte ce comburant à l'état "froid", c'est-à-dire que sa température n'a pas été élevée dans un échangeur de chaleur.

Dans le cas présent, l'injection de charbon pulvérisé et d'un comburant très riche en oxygène peut se faire soit directement par lesdites tuyères principales, soit par des tuyères auxiliaires situées sensiblement au même niveau que celles-ci, soit encore en partie par les tuyères principales et en partie par des tuyères auxiliaires.

Le gaz réducteur chaud injecté au niveau de la zone de réserve peut être produit par toute méthode connue telle que la gazéification des charbons, le reformage d'hydrocarbures (oxydation partielle à l'oxygène, à la vapeur d'eau, ...). Il peut également être produit à partir de gaz de récupération provenant de procédés métallurgiques.

Suivant une mise en oeuvre particulière du procédé de l'invention, le gaz réducteur chaud injecté dans la zone de réserve est un gaz dérivé du gaz de gueulard provenant notamment dudit haut fourneau.

A cet effet, toute méthode permettant de produire un gaz réducteur contenant essentiellement du CO + du H2 à partir du gaz de gueulard est utilisable dans le cadre de la présente invention.

On sait que le gaz de gueulard épuré d'un haut fourneau se trouve généralement à une température inférieure à 70°C et qu'il contient principalement CO2, H2O, CO, H2 et N2.

Sans qu'il en résulte une quelconque limitation de l'invention, on indiquera ici deux méthodes intéressantes de production dudit gaz réducteur.

Une première méthode consiste à prélever une partie, éventuellement la totalité, du gaz de gueulard et à la soumettre à une opération de décarbonatation, c'est-à-dire à en extraire le CO2 qu'il contient. Il s'agit dans ce cas d'une opération de séparation, qui conduit à un débit de gaz (CO + H2) inférieur au débit du gaz de gueulard prélevé.

Une deuxième méthode consiste également à prélever une partie, éventuellement la totalité, du gaz de gueulard et à la mélanger avec une quantité appropriée de gaz contenant au moins un hydrocarbure, tel que le gaz de four à coke ou le gaz naturel par exemple. Cet ou ces hydrocarbure(s) provoque(nt) une dissociation du $CO_2$ contenu dans le gaz de gueulard. Il s'agit ici d'une opération chimique, qui donne lieu à la formation d'une quantité de gaz réducteur (CO + H2) supérieure au volume global du mélange initial.

Dans les deux cas, le gaz réducteur (CO + H2) ainsi produit est élevé à une température comprise entre 850 et 1200°C.

Ce gaz réducteur chaud assure non seulement le chauffage des matières de la charge qui arrivent dans la zone de réserve, mais également une réduction partielle des oxydes de fer présents dans ces matières.

Au sens de la présente invention, le gaz réducteur chaud comprend, en volume, au moins 80 % et de préférence au moins 95 % de (CO + H2).

L'invention sera mieux comprise à la lecture de la description qui va suivre et qui porte d'une part sur un procédé de la technique actuelle et d'autre part sur des variantes de mise en oeuvre du procédé de la présente invention. Dans cette description, il est fait référence aux dessins annexés, dans lesquels la

Fig. 1 illustre un procédé de conduite d'un haut fourneau avec injection de charbon, suivant l'état actuel de la technique; la

Fig. 2 illustre un procédé conforme à une première variante de l'invention; et la

Fig. 3 illustre un procédé conforme à une seconde variante de l'invention.

Ces figures sont des représentations schématiques dans lesquelles on s'est volontairement limité aux éléments directement nécessaires à la bonne compréhension du procédé de l'invention. En outre, des éléments indentiques ou analogues sont désignés par les mêmes repères numériques dans toutes les figures. Enfin, toutes les quantités indiquées dans ce qui suit sont rapportées à la tonne de fonte produite.

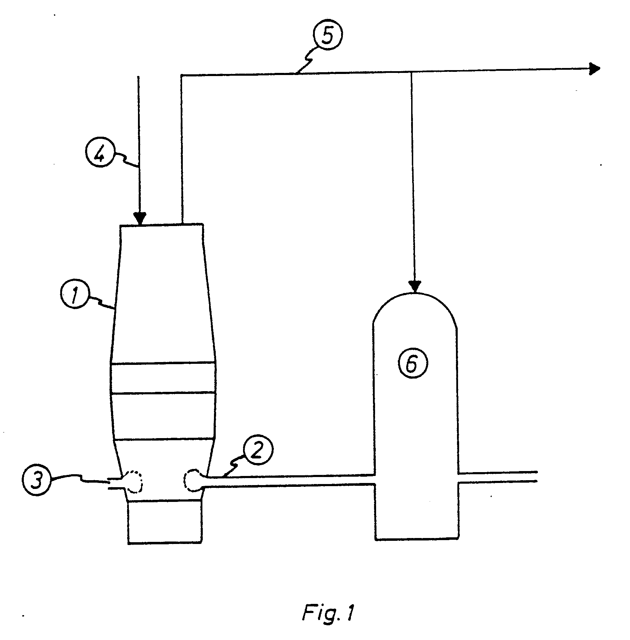

La figure 1 illustre un procédé qui appartient à l'état actuel de la technique et qui sera désigné dans la suite de la présente description par l'expression "marche de référence". Cette marche de référence est un procédé de conduite dans lequel on injecte, dans le haut fourneau (1), au niveau des tuyères principales :
(2) du vent chaud (1200°C) enrichi en oxygène (27 %);
(3) du charbon pulvérisé (140 kg/tonne de fonte).

Le charbon injecté est un charbon non cokéfiable, sec, contenant 11 % de cendres et 25,8 % de matières volatiles.

Cette marche requiert une mise au mille de 349 kg de coke, introduit en (4), et elle produit 1392 m3N de gaz de gueulard (5) dont une partie peut être utilisée pour réchauffer le vent dans les cowpers (6). Le reste du gaz de gueulard est envoyé dans le réseau de distribution habituel.

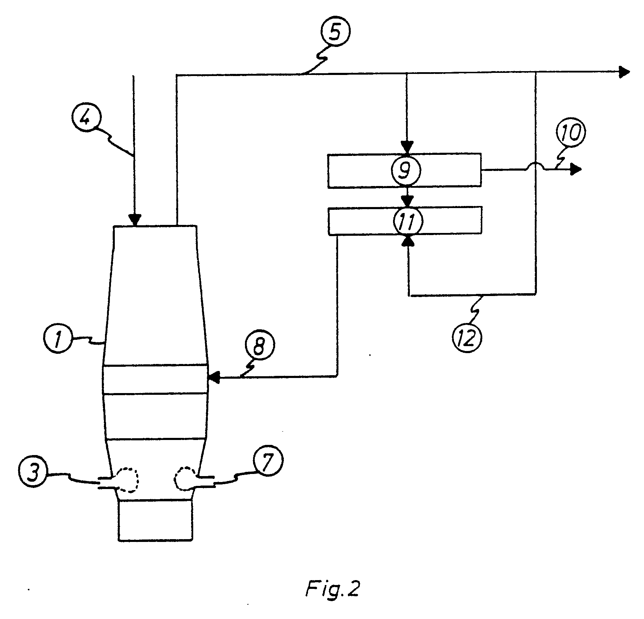

On considère à présent la figure 2, qui illustre un procédé conforme à une première variante de la présente invention. Selon ce procédé, on injecte dans le haut fourneau (1), au niveau des tuyères principales :
(3) du charbon pulvérisé (300 kg);
(7) de l'oxygène d'une pureté de 98 %, se trouvant à la température ambiante.

Le charbon injecté est le même que dans la marche de référence décrite plus haut.

En même temps, on injecte en (8), au niveau de la zone de réserve du haut fourneau, un gaz réducteur chaud, composé essentiellement de (CO + H2). Ce gaz réducteur est obtenu par décarbonatation (9) d'une partie du gaz de gueulard, le $CO_2$ étant éliminé en (10); le gaz réducteur est ensuite porté à environ 1000°C dans un réchauffeur (11) utilisant comme combustible du gaz de gueulard (12).

Cette variante du procédé de l'invention conduit à une mise au mille de 230 kg de coke, c'est-à-dire à une diminution de 119 kg, soit de 34 %, de la consommation de coke par rapport à la marche de référence.

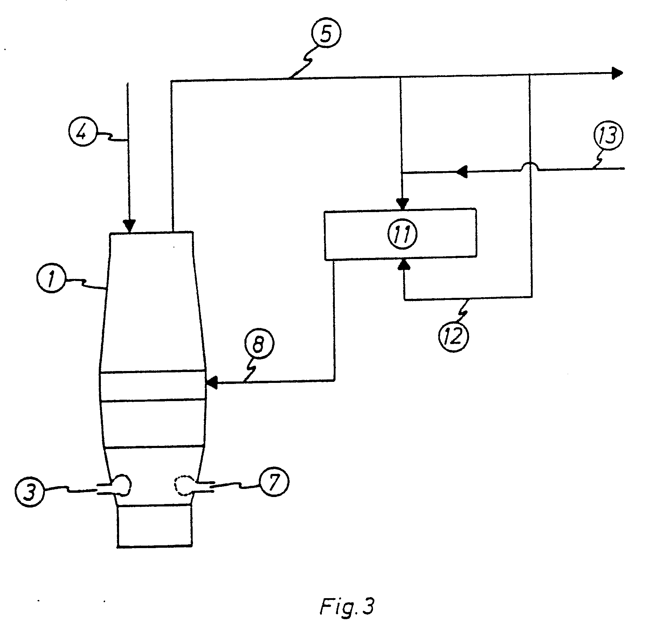

La figure 3 illustre une seconde variante du procédé de l'invention. Selon cette variante, on injecte dans le haut fourneau (1), au niveau des tuyères principales :
(3) du charbon pulvérisé (375 kg/tonne de fonte;
(7) 297 m3N/tf d'oxygène d'une pureté de 99 %, se trouvant à la température ambiante.

Le charbon injecté est le même que dans les deux exemples précédents.

En même temps on injecte, en (8), au niveau de la zone réserve du haut fourneau, 300 m3N de gaz réducteur chaud, composé essentiellement de (CO + H2) > Ce gaz réducteur est obtenu en mélangeant 112 m3N de gaz de gueulard (5) (composition : CO2 : 33,26 %, CO : 44,4 %, H2 : 20,70 % et N2 : 1,13 %) avec 126 m3N de gaz de four à coke (composition : H2 : 60 %, CH4 : 24 %, CO : 6 %, CO2 : 2 %, C2H6 : 4 %, N2 : 4 %) et en réchauffant ce mélange dans un réchauffeur (11). Les besoins calorifiques dudit réchauffeur (11) sont assurés par 110 m3N de gaz de gueulard (12), l'apport de chaleur étant ajusté de façon à atteindre une température de sortie du gaz réducteur de 950°C.

Cette variante du procédé de l'invention conduit à une mise au mille de 141 kg de coke. Le gain de mise au mille est ici de 208 kg de coke par rapport à la marche de référence, c'est-à-dire de 60 %.

Le tableau ci-après permet de comparer les principales données de marche des procédés représentés aux figures 1 et 3.

|  | | Référence | | Procédé de l'invention |
|---|---|---|---|---|
| Coke sec | kg/tf | 349 | | 141 |
| Charbon sec | kg/tf | 140 | | 375 |
| Vent quant. | m3N/tf | 890 | | – |
| temp. | °C | 1200 | | – |
| O2 | % | 27 | | – |
| Oxygène quant. | m3N/tf | – | | 297 |
| temp. | °C | – | | 25 |
| O2 | % | – | | 99 |
| Gaz réducteur | | | | |
| quant. | m3N/tf | – | | 300 |
| temp. | °C | – | | 950 |
| CO | % | – | | 39,89 |
| H2 | % | – | | 52,01 |
| CH4 | % | – | | 3,00 |
| N2 | % | – | | 2,10 |
| CO2 | % | – | | 3,00 |
| Gaz gueulard | m3N/tf | 1297 | | 1043 |
| recyclé quant. | m3N/tf | – | | 112 |
| temp. | °C | – | | 25 |
| Fonte   Si | % | 0,60 | | 0,20 |
| | °C | 1506 | | 1500 |

Comme on le voit, le procédé de l'invention permet de réaliser d'importantes économies de coke supplémentaires par rapport à la technique actuelle d'injection de charbon. En outre, il peut ne pas nécessiter de cowpers, ce qui représente une économie considérable tant en frais d'installation qu'en frais de fonctionnement.

Dans une troisième variante du procédé, on injecte dans le haut fourneau, au niveau des tuyères principales :
- du charbon pulvérisé (300 kg/tonne de fonte);
- un comburant en teneur en oxygène de 60 %, se trouvant à la température ambiante, comburant constitué par un mélange d'oxygène d'une pureté de 98 % et de vent froid,
tandis qu'au niveau de la zone de réserve, on insuffle un gaz réducteur composé essentiellement de (CO + H2), porté à une température d'environ 1000°C.

Cette variante du procédé de l'invention conduit à une mise au mille de 218 kg de coke. Le gain de mise au mille est ici de 131 kg de coke par rapport à la marche de référence, c'est-à-dire de 37,5 %.

## Revendications

1. Procédé de conduite d'un haut fourneau, caractérisé en ce que l'on injecte du charbon pulvérisé et un comburant très riche en oxygène au niveau des tuyères principales dudit haut fourneau, et du gaz réducteur chaud au niveau de la zone de réserve.

2. Procédé suivant la revendication 1, caractérisé en ce que ledit gaz réducteur chaud comprend, en volume, au moins 80 % et de préférence au moins 95 % de (CO + H2).

3. Procédé suivant l'une ou l'autre des revendications 1 et 2, caractérisé en ce que l'on injecte un comburant très riche en oxygène dont la température n'a pas été élevée dans un échangeur de chaleur.

4. Procédé suivant l'une ou l'autre des revendications 1 à 3, caractérisé en ce le gaz réducteur chaud injecté au niveau de la zone de réserve est produit à partir de gaz de récupération provenant de procédés métallurgiques.

5. Procédé suivant la revendication 4, caractérisé en ce que le gaz réducteur chaud injecté dans la zone de réserve est un gaz dérivé du gaz de gueulard provenant notamment dudit haut fourneau, que l'on a soumis à une opération de décarbonatation, de façon à obtenir un gaz réducteur contenant essentiellement (CO + H2) et que l'on a chauffé à une température comprise entre 850 et 1200°C.

6. Procédé suivant la revendication 4, caractérisé en ce que l'on injecte un gaz réducteur obtenu en mélangeant une partie du gaz de gueulard avec une quantité appropriée de gaz contenant au moins un hydrocarbure, et en chauffant ledit mélange de façon à obtenir un gaz réducteur contenant essentiellement (CO + H2) et dont la température est comprise entre 850 et 1200°C.

Fig. 1

Fig.2

Fig.3